# EUROPÄISCHE PATENTSCHRIFT

(11) **EP 1 189 418 B1**
(45) Veröffentlichungstag und Bekanntmachung des Hinweises auf die Patenterteilung: **03.12.2008**
(21) Anmeldenummer: 01119179.8
(22) Anmeldetag: 08.08.2001
(51) Int. Cl.: H04M 3/54, H04M 3/42, H04M 3/44, H04M 1/27

(54) **Verfahren zum Einrichten einer Umleitung an einem Kommunikationsendgerät**
Method for introducing a transfer at a communication terminal
Méthode pour introduire un renvoi à un terminal de communication

(30) Priorität: 13.09.2000 DE 10045246
(43) Veröffentlichungstag der Anmeldung: 20.03.2002
(73) Patentinhaber: Siemens Enterprise Communications GmbH & Co. KG, 81379 München (DE)
(72) Erfinder: von Ow, Hans-Peter, Dr., 81379 München (DE)
(74) Vertreter: Maier, Daniel Oliver

(56) Entgegenhaltungen:
- EP-A- 0 588 510
- DE-A- 19 640 265
- US-A- 5 469 501
- US-A- 5 541 983

## Beschreibung

Die Erfindung betrifft ein Verfahren zum Einrichten einer Umleitung an einem Kommunikationsendgerät gemäß dem Oberbegriff des Patentanspruches 1.

Bei vielen Kommunikationssystemen, insbesondere in Kommunikationsnetzen von Unternehmen, ist eine Funktion vorgesehen, die es Personen, deren örtlicher Arbeitsplatz häufig wechselt, ermöglichen soll, ein beliebiges Kommunikationsendgerät (im folgenden vereinfachend mit "Endgerät" bezeichnet) als das ihrige zu individualisieren. Solche Teilnehmer werden als "mobile Teilnehmer" bezeichnet, für welche zwar im Kommunikationssystem alle Teilnehmerdaten wie Rufnummer, Berechtigungen, Rufnummernziele usw. als Teilnehmerdatensatz gespeichert sind, denen aber physikalisch kein "festes Endgerät" zugeordnet ist. Aus diesem Grund wird ein mobiler Teilnehmer im Kommunikationssystem als "fiktiver Teilnehmer" geführt, der diesem Teilnehmer zugeordnete Teilnehmerdatensatz wird als "Heimatstation" benannt.

Ein mobiler Teilnehmer kann sich durch Anmelden einem beliebigen Endgerät innerhalb eines Kommunikationsnetzes zuordnen. Beim Anmelden autorisiert sich der mobile Teilnehmer durch seine Rufnummer im Netz und einer persönlichen Identifikationsnummer ("PIN"). Statt der Eingabe einer PIN unterstützen im übrigen viele Endgeräte auch die Identifizierung mittels einer Chipkarte.

Ein derartiges Verfahren ist z.B. aus der Druckschrift Siemens AG (Hrsg.): "System HICOM 600", München, 1984 bekannt. In dieser Druckschrift wird ein Verfahren zur Anrufumleitung von eingehenden, für einen - in diesem Fall festzugeordneten - Teilnehmer eines Kommunikationsendgerätes bestimmten Rufen offenbart. Der einem Kommunikationsendgerät festzugeordnete Teilnehmer kann an dem als Umleitungsziel eingestellten Kommunikationsendgerät für ihn eingehende Anrufe entgegennehmen. Die Konfiguration des als Umleitungsziel eingestellten Kommunikationsendgeräts wird jedoch nicht verändert.

Da eine Anrufumleitung mit einer Anmeldung am Endgerät oftmals mit Aufwand verbunden ist, wurden weitere Anrufumleitungsverfahren vorgeschlagen, die keine Anmeldung durch einen Teilnehmer vorsehen. Aus der US-amerikanischen Patentschrift US 5.469.501 ist ein Kommunikationssystem bekannt, dass sich unter anderem durch die Möglichkeit auszeichnet, an einem verbundenen Kommunikationsendgerät einen Wechsel der Rufnummerzuordnung und somit eine Anrufumleitung einzuleiten.

Das Erfordernis der Anmeldung bei einer Anrufumleitung wird in anderen technischen Lehren durch alternative Ausgestaltungen ersetzt. Aus der Europäischen Patentanmeldung 0588510A1 ist eine Anrufumleitung zur Umleitung von eingehenden Anrufen an ein alternatives Umleitungsziel bekannt. Bei einer Entgegennahme eines umgeleiteten Rufs am Umleitungsziel wird vom entgegennehmenden Teilnehmer ein Identifizierungskode erwartet, um sicherzustellen, dass der entgegennehmende Teilnehmer der Teilnehmer des eingehenden Anrufes ist.

Nach erfolgter Autorisierung werden vom Kommunikationssystem für den mobilen Teilnehmer eingehende Anrufe an das betreffende Endgerät geleitet. Außerdem wird die Behandlung dieses Endgeräts anhand der Teilnehmerdaten in der Heimatstation des mobilen Teilnehmers konfiguriert, u.a. wird bei ausgehenden Anrufen als Name des Anrufenden der Name des mobilen Teilnehmers ausgegeben, ebenso werden Berechtigungsdaten des mobilen Teilnehmers geladen.

Wird die Zuordnung eines Endgeräts zu einem mobilen Teilnehmer gelöst, zum Beispiel nach einer Abmeldung des mobilen Teilnehmers, wird für an den mobilen Teilnehmer gerichtete Anrufe eine sogenannte "feste Rufumleitung" aktiviert, deren Ziel i.A. ein zentraler Anrufbeantworter ("Voice Mail") des Kommunikationssystems ist. Als feste Rufumleitung wird eine Umleitung zu einem voreingestellten Ziel verstanden, wenn keine Zuordnung zu einem anderen Endgerät eingerichtet ist. Die dieses Ziel identifizierende Information ist ebenfalls ein Bestandteil der Daten des fiktiven Teilnehmers, die in der Heimatstation des mobilen Teilnehmer gespeichert sind.

Will ein mobiler Teilnehmer von einem Endgerät auf ein anderes wechseln, muss er sich zuerst am aktuellen Endgerät abmelden, für ihn eingehende Anrufe werden dann -wie vorstehend erwähnt- an den zentralen Anrufbeantworter geleitet. Der mobile Teilnehmer kann sich nach dem Abmelden bei einem anderen Endgerät wieder anmelden, das dann nach erfolgter Anmeldung mit seinen Teilnehmerdaten in der Heimatstation konfiguriert wird. Alternativ kann ein mobiler Teilnehmer eine Anrufumleitung auf ein anderes Endgerät veranlassen, wenn er für ihn eingehende Anrufe entgegennehmen will, ohne sich an diesem Endgerät anzumelden. Um diese Umleitung einzuleiten, muss er an dem Endgerät, an dem er angemeldet ist, ein Leistungsmerkmal "Umleitung programmieren bei einem dritten Teilnehmer" auswählen und die Rufnummer seiner Heimatstation, seine persönliche Identifikationsnummer sowie die Rufnummer des Endgeräts, an das die Anrufumleitung erfolgen soll, eingeben.

Aufgabe der Erfindung ist es, die Anrufumleitung eines mobilen Teilnehmers zu vereinfachen.

Diese Aufgabe wird erfindungsgemäß durch die kennzeichnenden Merkmale des Patentanspruchs 1 gelöst.

Bei dem erfindungsgemäßen Verfahren erübrigt sich für den mobilen Teilnehmer die Eingabe der Rufnummer seiner Heimatstation und seiner persönlichen Identifikationsnummer, da diese Daten aus der Autorisierung des mobilen Teilnehmers bekannt sind und für das erfindungsgemäße Verfahren wiederverwendet werden.

Ein wesentlicher Vorteil des erfindungsgemäßen Verfahrens besteht darin, dass eine Umleitung des mobilen Teilnehmers einzig durch Auswahl eines Eingabeelements auf einem Endgerät, an dem er derzeitig angemeldet ist, zu bewerkstelligen ist.

Ein weiterer Vorteil des erfindungsgemäßen Verfahrens ist darin zu sehen, dass seine Implementierung nur minimale Eingriffe in Netzwerkprotokolle bzw. in die Netzwerkstruktur erfordert, und im wesentlichen nur durch Änderungen im Steuerungsprogramms des Kommunikationssystems der Heimatstation realisierbar ist.

Vorteilhafte Weiterbildungen der Erfindung sind in den Unteransprüchen angegeben.

Vorteilhaft werden am Endgerät bereits vorhandene Zielwahltasten dazu reserviert um, ein gewünschtes Umleitungsziel im Sinne der Erfindung schnell auswählbar zu machen (Anspruch 2), wobei die Zielwahltaste auch als Bereich eines berührungsempfindlichen Bildschirms (Touch Screen) ausgebildet sein kann. Mit einer Spracheingabeeinrichtung des Endgeräts erfolgt die Auswahl des Umleitungsziels durch ein gesprochenes Wort (Anspruch 3).

Die Verwendung eines Bearbeitungskodes (Anspruch 4), der einem reservierten Eingabeelement zugeordnet ist, erlaubt eine Bearbeitung der Rufumleitung durch die Systemsteuerung des der Heimatstation des mobilen Teilnehmers zugeordneten Kommunikationssystems, die keine tiefgreifenden Änderungen im Programmablauf erfordert. Der Bearbeitungskode wird ohne Prüfungen durch Netzwerkprotokolle an die Programmsteuerung übergeben und von dieser für eine Auswahl des Umleitungszieles verwendet. Die Systemsteuerung des der Heimatstation des mobilen Teilnehmers zugeordneten Kommunikationssystems veranlasst mit Hilfe des Bearbeitungskodes eine Auswahl aus Umleitungszielen, die in den Teilnehmerdaten des mobilen Teilnehmers gespeichert sind.

Hat sich ein mobiler Teilnehmer an einem Endgerät eines Kommunikationssystem angemeldet, das nicht mit dem Kommunikationssystem der ihm zugehörigen Heimatstation identisch ist, wird der Bearbeitungskode (Anspruch 5) vorteilhaft vom Kommunikationssystem des Endgeräts an das Kommunikationssystem der Heimatstation übermittelt, um die Veranlassung einer Umleitung durch den mobilen Teilnehmer nicht auf Endgeräte einzuschränken, die nur dem Kommunikationssystem seiner Heimatstation zugeordnet sind.

Ein Schreibschutz (Anspruch 6) hat den Vorteil, ein unbeabsichtigtes Ändern oder Löschen des Bearbeitungskode durch einen Teilnehmer zu unterbinden. Eine beabsichtigte Änderung wird damit ebenso zweckmäßig unterbunden, da der Bearbeitungskode lediglich für die Systemsteuerung des der Heimatstation des mobilen Teilnehmers zugeordneten Kommunikationssystems, nicht aber für den Teilnehmer interpretierbar ist. Der Bearbeitungskode enthält insbesondere keine Information über die Rufnummer des Umleitungszieles, die erst durch eine Rufnummernzuordnung in dem der Heimatstation des mobilen Teilnehmers zugeordneten Kommunikationssystems ausgeführt wird.

Eine Weiterbildung der Erfindung sieht vor (Anspruch 7), dass ein Teilnehmer, der sich an einem Endgerät abgemeldet hat, bei der Auswahl eines der reservierten Eingabeelemente eine Meldung bekommt, die ihn darauf hinweist, dass dieses Leistungsmerkmal für ihn nicht verfügbar ist. Dies hat weiterhin den Vorteil, dass ein nicht angemeldeter Teilnehmer, der das Endgerät nach dem Abmelden eines mobilen Teilnehmers bedient, über die Nichtzulässigkeit der Auswahl dieses reservierten Eingabeelements informiert wird.

Anhand der Zeichnung wird im weiteren ein Ausführungsbeispiel der Erfindung näher erläutert.

### Dabei zeigen

Fig 1 schematisch die bei der Umleitung eines mobilen Teilnehmers beteiligten Systeme und Meldungen.

Fig 2 schematisch den Aufbau des Bearbeitungskodes der reservierten Eingabeelemente.

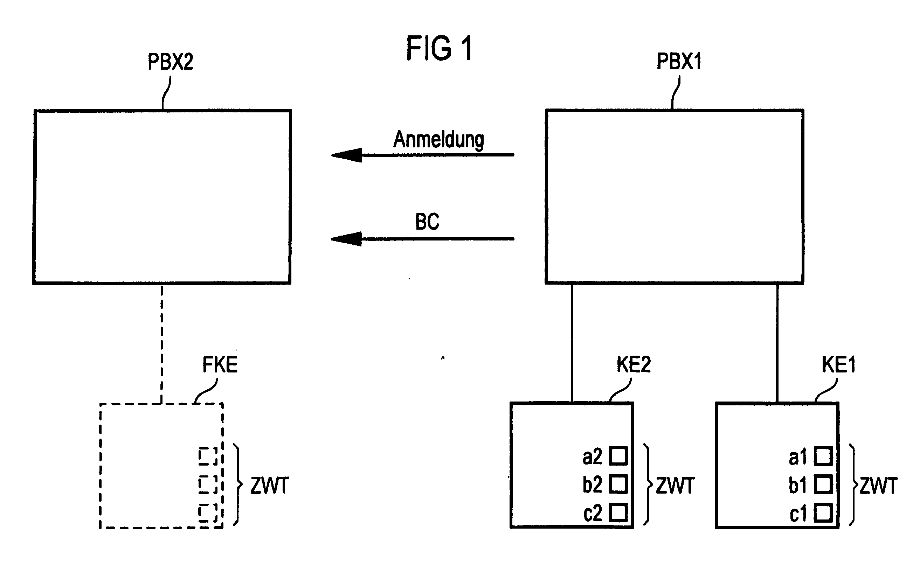

Fig 1 zeigt ein erstes Kommunikationssystem PBX1 mit einem ersten und einem zweiten angeschlossenen Endgerät KE1 bzw. KE2. Außerdem ist ein zu einem weiteren Kommunikationssystem PBX2 gehöriges fiktives Endgerät FKE dargestellt. Dieses fiktive Endgerät FKE ist eine symbolische Darstellung der Heimatstation - also dem Ort der Teilnehmerdaten des zugeordneten Fiktiven Teilnehmers - eines mobilen Teilnehmers, der sich, z.B. am ersten Endgerät KE1 angemeldet hat.

Das fiktive Endgerät FKE ist gestrichelt dargestellt, um anzuzeigen, dass es sich hierbei nicht um ein reales Gerät handelt, sondern um eine die Funktion symbolisierende Darstellung der Heimatstation, deren Funktionen durch das zweite Kommunikationssystem PBX2 ausgeführt werden.

Im vorliegenden Fall sei davon ausgegangen, dass ein mobiler Teilnehmer sich über das erste Endgerät KE1 anmeldet, dessen zugehöriges Kommunikationssystem PBX1 nicht identisch mit dem Kommunikationssystem PBX2 der Heimatstation des mobilen Teilnehmers ist. Die im Zusammenhang mit einer Anmeldung des mobilen Teilnehmers stehenden Daten werden - wie durch einen Pfeil dargestellt - von dem ersten Kommunikationssystem PBX1 an das zweite Kommunikationssystem PBX2 übermittelt.

Im ersten und zweiten Endgerät KE1, KE2 sind jeweils reservierte Zielwahltasten ZWT vorgesehen, von denen ein angemeldeter mobiler Teilnehmer eine auswählen d.h. betätigen kann, um dadurch eine Umleitung auf ein anderes Endgerät zu veranlassen. Am mobilen Endgerät FKE sind ebenso Zielwahltasten ZWT dargestellt, die allerdings lediglich der funktionalen Symbolisierung der Zielwahltasten ZWT an der Heimatstation dienen sollen.

Die Zielwahltasten ZWT a1, b1, c1 sind im ersten und zweiten Endgerät KE1, KE2 für die Umleitung eines mobilen Teilnehmers reserviert worden, indem ihnen ein jeweiliger Bearbeitungskode BC zugeordnet wurde. Der mobile Teilnehmer, der sich am ersten Endgerät KE1 angemeldet hat, kann also eine Umleitung auf ein anderes Endgerät, z.B. das zweite Endgerät KE2, veranlassen, in dem er die dieses Ziel bezeichnende Zielwahltaste ZWT a1 drückt und damit die Abgabe eines dieses Ziel identifizierenden Bearbeitungskodes auslöst. Bei Betätigen der Zielwahltaste ZWT a1 wird also ein zugehöriger Bearbeitungskode BC an das die Heimatstation des mobilen Teilnehmers beinhaltende zweite Kommunikationssystem PBX2 übermittelt. Nach Abmelden des mobilen Teilnehmers von seinem aktuellen Endgerät KE1 wird dann die Umleitung auf das zweite Endgerät KE2 veranlasst.

Der an das zweite Kommunikationssystem PBX2 übermittelte Bearbeitungskode BC unterscheidet sich zwar abhängig von der gedrückten reservierten Zielwahltaste ZWT, er hängt aber nicht vom jeweiligen mobilen Teilnehmer ab, der am Endgerät KE1 angemeldet ist, da der Bearbeitungskode BC lediglich die gedrückte Zielwahltaste identifiziert (z.B. Zielwahltaste ZWT a1), das dieser Zielwahltaste zugeordnete Umleitungsziel aber abhängig vom jeweiligen mobilen Teilnehmer aus dessen Teilnehmerdaten zugeordnet wird.

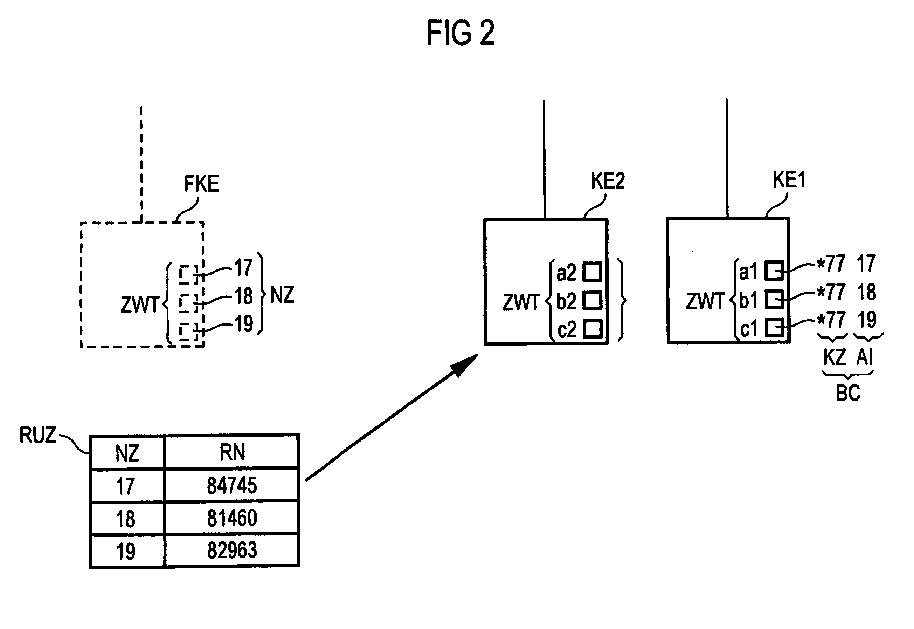

In Fig 2 sind die Bestandteile des Bearbeitungskodes BC bei der Umleitung eines mobilen Teilnehmers beispielhaft dargestellt. In diesem Zusammenhang sind lediglich das erste und zweite Endgerät KE1, KE2, sowie das fiktive Endgerät FKE ohne ihre zugehörigen Kommunikationssysteme gezeigt.

Am ersten Endgerät KE1 ist die Zuordnung der reservierten Zielwahltasten ZWT a1, b1, c1 zu ihrem jeweiligen Bearbeitungskode BC gezeigt. Der jeweilige Bearbeitungskode BC beinhaltet eine Kennzahl KZ und eine Adressierungsinformation AI. Die Kennzahl KZ (*77) selektiert innerhalb der Programmstruktur in dem der Heimatstation des mobilen Teilnehmers zugehörigen zweiten Kommunikationssystem PBX2 (nicht dargestellt) ein mit dieser Kennzahl KZ aktivierbares Unterprogramm, das die weitere Bearbeitung der Umleitung steuert.

Der zweite Bestandteil des Bearbeitungskodes BC, die Adressierungsinformation AI, dient diesem Unterprogramm zur Bestimmung des Umleitungsziels. Die Adressierungsinformation AI dient der Selektierung der Rufnummer RN des Endgeräts, auf das eine Umleitung eingeleitet werden soll. Die Vorgänge bei einer Umleitung eines mobilen Teilnehmers werden im folgenden anhand einer Umleitung vom ersten Endgerät KE1 auf das zweite Endgerät KE2 erläutert.

Wird eine reservierte Zielwahltaste ZWT a1 am ersten Endgerät KE1 ausgewählt, d.h. betätigt, wird der dieser Zielwahltaste ZWT a1 zugehörige Bearbeitungskode BC (*7717) von dem diesem ersten Endgerät KE1 zugeordneten ersten Kommunikationssystem PBX1 (nicht dargestellt) an das zweite Kommunikationssystem PBX2 (nicht dargestellt) übermittelt, weil eine Überprüfung in den Zuordnungstabellen des ersten Kommunikationssystems PBX1 (nicht dargestellt) ergeben hat, dass sich die Heimatstation des mobilen Teilnehmers in dem zweiten Kommunikationssystem PBX2 (nicht dargestellt) befindet. Jede der Zielwahltasten ZWT a1, b1, c1, die am ersten Endgerät KE1 für die Umleitung eines mobilen Teilnehmers reserviert sind, ist ein jeweiliger Bearbeitungskode BC permanent zugewiesen worden, d.h. auch ein Teilnehmer, der sich nicht als mobiler Teilnehmer an diesem Endgerät KE1 angemeldet hat, kann diese reservierten Zielwahltasten betätigen und die Abgabe eines Bearbeitungskodes an das erste Kommunikationssystem PBX1 veranlassen. Daher wird im ersten Kommunikationssystem PBX1 zuerst geprüft, ob sich ein mobiler Teilnehmer an dem ersten Endgerät KE1 angemeldet hat, denn nur für einen mobilen Teilnehmer kann durch diese reservierten Zielwahltasten ZWT a1, b1, c1 eine Umleitung veranlasst werden. Für einen nichtangemeldeten Teilnehmer hingegen wird vom ersten Kommunikationssystem PBX1 in Folge einer Betätigung einer der drei reservierten Zielwahltasten ZWT a1, a2 oder a3 an einer Ausgabeeinheit des Endgeräts KE1 eine Meldung veranlasst, die darauf hinweist, dass dieses Leistungsmerkmal nicht verfügbar ist.

Für die Bearbeitung der Anrufumleitung des mobilen Teilnehmers ist durch die Autorisierung des mobilen Teilnehmers bekannt, dass die umzuleitende Station die Heimatstation des Teilnehmers ist, die sich auf einem anderen, in diesem Fall dem zweiten Kommunikationssystem PBX2 befindet. Zur Bestimmung des Umleitungsziel wird der Bearbeitungskode BC ausgewertet.

Was die programmtechnische Realisierung betrifft, wird bei einer Auswahl der Zielwahltaste ZWT a1 mit dem Bearbeitungskode BC "*7717" in der Programmstruktur des Kommunikationssystems PBX2 (nicht dargestellt) ein für die Kennzahl KZ "*77" reserviertes Unterprogramm selektiert, das die Adressierungsinformation AI ("17") mit Namenszielen NZ des fiktiven Endgeräts vergleicht. Zur bildlichen Darstellung sind diese Namensziele NZ als Zielwahltasten ZWT des fiktiven Endgeräts FKE dargestellt, die Namensziele NZ werden von der Systemsteuerung des Kommunikationssystems PBX2 (nicht dargestellt) für eine Selektierung der Rufnummer RN eines Teilnehmers in einer Rufnummernzuordnungstabelle RUZ verwendet.

Die dem Namensziel NZ ("17") zugeordnete Rufnummer RN ("84745") entspricht der Rufnummer des zweiten Endgeräts KE2, auf das nach dem Abmelden vom ersten Endgerät KE1 eine Umleitung des mobilen Teilnehmers veranlasst wird. Zu diesem Zweck ruft das vorstehend genannte Unterprogramm das Leistungsmerkmal "Umleitung programmieren bei einem dritten Teilnehmer" auf, das in der Systemsteuerung des Kommunikationssystems PBX2 (nicht dargestellt) bereits für "variable Rufumleitungen" vorhanden ist.

Unter einer variablen Rufumleitung versteht man die Umleitung auf ein Umleitungsziel, wobei durch diese Umleitung im Unterschied zu einer "festen Rufumleitung" nicht ein voreingestelltes Umleitungsziel ausgewählt wird, sondern eine Rufumleitung auf ein im Zuge der Umleitungsaktivität zu spezifizierendes Umleitungsziel durchgeführt wird. Als spezifiziertes Umleitungsziel wird mit Hilfe der Rufnummernzuordnungstabelle RUZ die Rufnummer RN des zweiten Endgeräts KE2 ermittelt, auf das die Umleitung nach Abmelden an dem ersten Endgerät KE1 durch den mobilen Teilnehmers vorgenommen wird.

## Patentansprüche

1. Verfahren zum Einrichten einer Umleitung an einem Kommunikationsendgerät (KE1), das durch Anmelden vorübergehend einem mobilen Teilnehmer eines Kommunikationssystems (PBX1) zugeordnet ist,
**dadurch gekennzeichnet,**
**dass** an dem Kommunikationsendgerät (KE1) wenigstens ein Eingabeelement reserviert wird, bei dessen Auswahl vom Kommunikationssystem (PBX1) eine Umleitung zu einem für den jeweiligen mobilen Teilnehmer als verfügbar vermerkten Umleitungszielendgerät (KE2) eingeleitet wird, wobei nach einem Abmelden des mobilen Teilnehmers am Kommunikationsendgerät (KE1) das zugeordnete Umleitungszielendgerät (KE2) mittels Teilnehmerdaten des mobilen Teilnehmers konfiguriert wird und anschließend Anrufe an den mobilen Teilnehmer an das Umleitungszielendgerät (KE2) umgeleitet werden.

2. Verfahren nach Anspruch 1,
**dadurch gekennzeichnet,**
**dass** das Eingabeelement eine Zielwahltaste (ZWT) des Kommunikationsendgeräts (KE1) ist.

3. Verfahren nach Anspruch 1 oder 2,
**dadurch gekennzeichnet,**
**dass** das Eingabeelement ein gesprochenes Wort für eine Spracheingabeeinrichtung des Kommunikationsendgeräts (KE1) ist.

4. Verfahren nach einem der vorgenannten Ansprüche,
**dadurch gekennzeichnet,**
**dass** bei Auswahl des Eingabeelements eine Abgabe eines Bearbeitungskodes (BC) für eine Steuerung der Umleitung an ein Systemsteuermodul des Kommunikationssystems (PBX1) veranlasst wird.

5. Verfahren nach Anspruch 4,
**dadurch gekennzeichnet,**
**dass** bei einem mit dem Kommunikationssystem (PBX1) verbundenen weiteren Kommunikationssystem (PBX2), in dem Teilnehmerdaten des mobilen Teilnehmers gespeichert sind, der Bearbeitungskode (BC) an das weitere Kommunikationssystem (PBX2) übermittelt wird.

6. Verfahren nach Anspruch 4 oder 5,
**dadurch gekennzeichnet,**
**dass** ein Ändern des Bearbeitungskodes (BC) durch den mobilen Teilnehmer unterbunden wird.

7. Verfahren nach einem der vorgenannten Ansprüche,
**dadurch gekennzeichnet,**
**dass** an dem Kommunikationsendgerät (KE1) nach dem Abmelden eine Auswahl des reservierten Eingabeelements eine Ausgabe einer Abweisungsmeldung bewirkt.

## Claims

1. Method for setting up a diversion at a communication terminal (KE1) which is temporarily allocated to a mobile subscriber of a communication system (PBX1) by means of registration, **characterized in that** at the communication terminal (KE1), at least one input element is reserved on selection of which the communication system (PBX1) initiates a diversion to a diversion destination terminal (KE2) noted as available for the respective mobile subscriber, wherein, after the mobile subscriber is signed off at the communication terminal (KE1) the dedicated diversion destination terminal (KE2) is configured using subscriber data of the mobile subscriber, and then calls to the mobile subscriber are diverted to the diversion destination terminal (KE2).

2. Method according to Claim 1, **characterized in that** the input element is a name key (ZWT) of the communication terminal (KE1).

3. Method according to Claim 1 or 2, **characterized in that** the input element is a spoken word for a voice input device of the communication terminal (KE1).

4. Method according to one of the preceding claims, **characterized in that**, on selection of the input element, the delivery of a processing code (BC), for controlling the diversion, to a system control module of the communication system (PBX1) is initiated.

5. Method according to Claim 4, **characterized in that**, in the case of a further communication system (PBX2) which is connected to the communication system (PBX1) and in which subscriber data of the mobile subscriber are stored, the processing code (BC) is transferred to the further communication system (PBX2).

6. Method according to Claim 4 or 5, **characterized in that** the mobile subscriber is prevented from changing the processing code (BC).

7. Method according to one of the aforementioned claims, **characterized in that**, after the signing-off, selection of the reserved input element results in the output of a rejection message at the communication terminal (KE1).

## Revendications

1. Procédé pour installer un renvoi à un terminal de communication (KE1) qui, par enregistrement, est provisoirement attribué à un abonné mobile d'un système de communication (PBX1),
**caractérisé en ce**
**qu'**au moins un élément d'entrée est réservé sur le terminal de communication (KE1), lors de la sélection duquel le système de communication (PBX1) initie un renvoi vers un terminal de destination de renvoi (KE2) **caractérisé** comme disponible pour l'abonné mobile respectif, le terminal de destination de renvoi attribué (KE2) étant configuré, après un désenregistrement de l'abonné mobile sur le terminal de communication (KE1), au moyen de données d'abonné de l'abonné mobile, et les appels émis à l'abonné mobile étant ensuite renvoyés au terminal de destination de renvoi (KE2).

2. Procédé selon la revendication 1,
**caractérisé en ce**
**que** l'élément d'entrée est une touche de sélection de destination (ZWT) du terminal de communication (KE1).

3. Procédé selon la revendication 1 ou 2,
**caractérisé en ce**
**que** l'élément d'entrée est un mot parlé pour un dispositif d'entrée vocale du terminal de communication (KE1).

4. Procédé selon l'une quelconque des revendications précédentes,
**caractérisé en ce**
**que** lors de la sélection de l'élément d'entrée, une sortie d'un code de traitement (BC) est produite pour une commande du renvoi à un module de commande de système du système de communication (PBX1).

5. Procédé selon la revendication 4,
**caractérisé en ce**
**que** dans un système de communication supplémentaire (PBX2) raccordé au système de communication (PBX1), dans lequel des données d'abonné d'un abonné mobile sont mémorisées, le code de traitement (BC) est transmis au système de communication supplémentaire (PBX2).

6. Procédé selon la revendication 4 ou 5,
**caractérisé en ce**
**qu'**une modification du code de traitement (BC) par l'abonné mobile est interdite.

7. Procédé selon l'une quelconque des revendications précédentes,
**caractérisé en ce**
**qu'**une sélection de l'élément d'entrée réservé produit une sortie d'un message de refus sur le terminal de communication (KE1) après le désenregistrement.
